# EUROPÄISCHE PATENTSCHRIFT

(11) **EP 1 202 882 B1**
(45) Veröffentlichungstag und Bekanntmachung des Hinweises auf die Patenterteilung: **23.04.2003**
(21) Anmeldenummer: 00960299.6
(22) Anmeldetag: 19.07.2000
(51) Int. Cl.: B60R 25/04

(54) **VORRICHTUNG ZUM STILLLEGEN EINES UNRECHTMÄSSIG BENUTZTEN KRAFTFAHRZEUGES**
DEVICE FOR SHUTTING DOWN AN UNLAWFULLY UTILIZED MOTOR VEHICLE
DISPOSITIF POUR ARRETER UN VEHICULE AUTOMOBILE UTILISE DE MANIERE ILLICITE

(30) Priorität: 31.07.1999 DE 19936116
(43) Veröffentlichungstag der Anmeldung: 08.05.2002
(73) Patentinhaber: ROBERT BOSCH GMBH, 70442 Stuttgart (DE)
(72) Erfinder: HAULER, Peter, D-76275 Ettlingen (DE); WEISS, Karl-Ernst, D-76275 Ettlingen (DE)
(86) Internationale Anmeldenummer: DE0002327
(87) Internationale Veröffentlichungsnummer: WO01008944

(56) Entgegenhaltungen:
- WO-A-98/48393
- DE-A- 19 519 420
- DE-C- 19 725 669
- FR-A- 2 767 595

## Beschreibung

### Stand der Technik

Die Erfindung geht aus von einer Vorrichtung zum Stillegen eines unrechtmäßig benutzten Kraftfahrzeugs nach der Gattung des unabhängigen Anspruchs. Aus der DE 197 25 669 ist eine Vorrichtung gemäß dem Oberbegriff von Anspruch 1 bekannt. Weiter wird in der EP 0745522B1 ein unrechtmäßig benutztes Kraftfahrzeug nur dann durch ein extern gesendetes Funksignal stillgelegt, wenn ein Sensor den Stillstand des Kraftfahrzeugs detektiert hat. Damit wird die Stillsetzung des Kraftfahrzeugs während der Fahrt ausgeschlossen. Dadurch können einige personengefährdende Situationen verhindert werden.

Allerdings kann damit ein Stillegen eines stehenden Fahrzeugs in weiteren kritischen Situationen wie beispielsweise bei Absterben des Motors auf einem Bahnübergang nicht ausgeschlossen werden.

Der vorliegenden Erfindung liegt die Aufgabe zugrunde, eine Anordnung anzugeben, mit der die Gefahr einer Stillegung des Kraftfahrzeugs in kritischen Situationen weiter reduziert wird. Die Aufgabe wird mit den Merkmalen des unabhängigen Anspruchs gelöst.

### Vorteile der Erfindung

Die erfindungsgemäße Vorrichtung zum Stillegen eines unrechtmäßig genutzten Kraftfahrzeugs weist eine betriebsnotwendige Fahrzeugkomponente auf, die von einem Sicherheits-steuergerät deaktiviert wird, wenn eine Stillegungsbedingung erfüllt ist. Ein Ausgangssignal einer Geschwindigkeitserfassung ist dem Sicherheits-Steuergerät zugeführt. Eine Deaktivierung der betriebsnotwendigen Fahrzeugkomponente erfolgt in Abhängigkeit von dem Ausgangssignal der Geschwindigkeitserfassung. Die erfindungsgemäße Vorrichtung zeichnet sich dadurch aus, daß Erfassungsmittel wenigstens einer weiteren für den abgestellten und unbenutzten Zustand des Kraftfahrzeugs charakteristischen Größe vorgesehen sind zur Deaktivierung der betriebsnotwendigen Fahrzeugkomponenten in Abhängigkeit von der erfaßten Größe. Eine Stillegung des Kraftfahrzeugs wird somit nur zugelassen, wenn noch zumindest eine weitere Bedingung erfüllt ist, die auf den abgestellten und unbenutzten Zustand des Kraftfahrzeugs schließen läßt. Damit kann die Stillegung beispielsweise dann ausgeschlossen werden, wenn ein Benutzer den Motor des Kraftfahrzeugs an einer gefahrenträchtigen Stelle, beispielsweise einem Bahnübergang oder einer Kreuzung, abwürgt. Als Erfassungsmittel ist ein Temperatursensor vorgesehen, der beispielsweise die Kühlwasser- oder die Öltemperatur ermittelt. Diese Temperaturen sind verläßliche Indikatoren für ein hinreichend lange abgestelltes Kraftfahrzeug.

Als eine zweckmäßige Ausgestaltung ist ein Innenraumsensor und/oder Sitzbelegungserkennungssensor vorgesehen. Liegt ein Stillegungsbefehl vor, wird die betriebsnotwendige Komponente nur dann deaktiviert, wenn das Ausgangssignal der genannten Sensoren darauf schließen läßt, daß sich keine Person im Kraftfahrzeug befindet. Zweckmäßiger Weise ist eine Bedienelementerfassung vorgesehen, die die zeitliche Abfolge der zurückliegenden Bedienvorgänge protokolliert. Wurde innerhalb einer Zeitspanne von beispielsweise 10 Minuten keine Zustandsveränderung eines Bedienelements erkannt, kann das Kraftfahrzeug stillgelegt werden, da fehlende Bedienvorgänge auf ein derzeit unbenutztes Kraftfahrzeug schließen lassen. (z.B. Lenkwinkelveränderung, Gaspedal) In einer zweckmäßigen Weiterbildung wird das Signal Zündung an/aus als zusätzliches Deaktivierungskriterium herangezogen. Die Deaktivierung erfolgt dann nur bei "Zündung aus" und Erfüllung der weiteren Bedingungen zur Erkennung einers tatsächlich abgestellten Fahrzeugs.

Zweckmäßige Weiterbildungen ergeben sich aus weiteren abhängigen Ansprüchen und aus der Beschreibung.

### Zeichnung

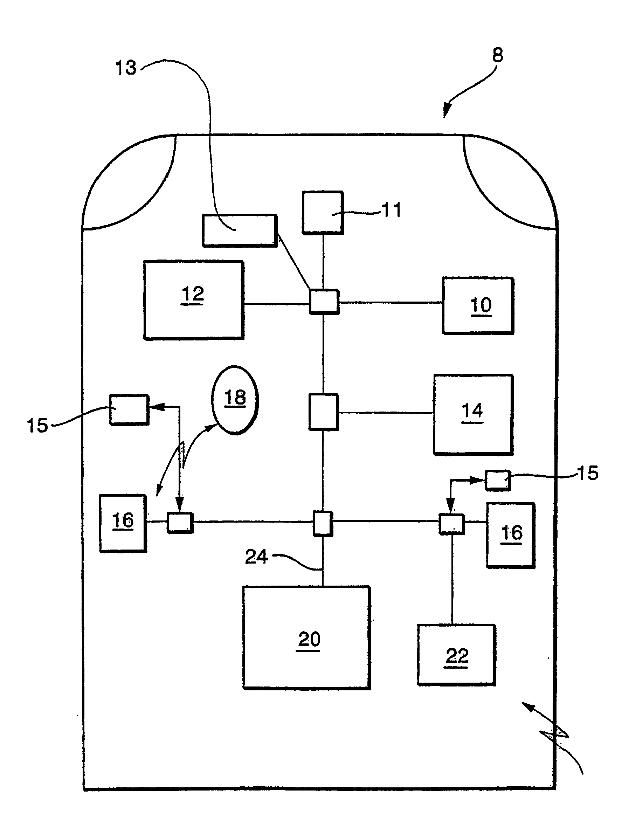

Ein Ausführungsbeispiel der Erfindung ist in der Zeichnung dargestellt und wird im folgenden näher beschrieben. Die Figur zeigt ein Blockschaltbild der erfindungsgemäßen Vorrichtung.

### Beschreibung

Eine Geschwindigkeitserfassung 10, ein Temperatursensor 11, eine Innenraumüberwachung 12 eine Sitzbelegungserkennung 15 und eine Bedienelementerfassung 13 geben jeweils ihre Ausgangssignale über ein Bussystem 24 an ein Sicherheits-Steuergerät 20. Ein Funktionssteuergerät 14 als eine betriebsnotwendige Fahrzeugkomponente kann durch das Sicherheits-steuergerät 20 deaktiviert werden, so daß damit der Betrieb des Kraftfahrzeugs 8 unterbunden wird. Ein die Fahrberechtigung nachweisender Transponder 18 tauscht Signale aus mit einem oder zwei Sender(n)/Empfänger(n) 16, die im Bereich der sogenannten B-Säule des Kraftfahrzeugs 8 angeordnet sind. Sender/Empfänger 16 sind ebenfalls über das Bussystem 24 mit dem Sicherheits-Steuergerät 20 verbunden. Auch ein Funkempfänger 22 leitet ein empfangenes Signal über das Bussystem 24 an das Sicherheits-Steuergerät 20 weiter, das das per Funk übermittelte Stillsetzungskommando zweckmäßigerweise speichert.

Vorliegendes Ausführungsbeispiel ermöglicht eine gefahrlose Stillsetzung des Kraftfahrzeugs 8. Unter Stillsetzung wird eine gezielte Deaktivierung betriebsnotwendiger Fahrzeugkomponenten verstanden, ohne deren Freischaltung ein Betrieb des Kraftfahrzeugs 8 nicht möglich ist. Im Ausführungsbeispiel übernimmt diese Funktion das Funktionssteuergerät 14, wobei es sich beispielsweise um ein Motorsteuergerät handelt. Ohne dessen Freischaltung kann der Motor des Kraftfahrzeugs 8 nicht gestartet werden.

Das Sicherheits-Steuergerät 20 sendet über das Bussystem 24 einen Deaktivierungsbefehl an das Funktionssteuergerät 14, wenn ein Stillsetzungsbefehl und nachfolgend beschriebene Bedingungen vorliegen. Der Stillsetzungsbefehl kann beispielsweise innerhalb des Kraftfahrzeugs 8 generiert werden, wenn ein zyklisch abgefragter Transponder 18 nicht oder nicht mit einem korrekten Codesignal antwortet. Alternativ ist es jedoch möglich, den Stillsetzungsbefehl von einer externen Zentrale an das Kraftfahrzeug 8 zu senden. Dies könnte beispielsweise über ein Mobilfunknetz erfolgen. Hierzu ist ein Funkempfänger 22 vorzusehen, der den Stillsetzungsbefehl an das Sicherheits-Steuergerät 20 weiterleitet.

Um eine sichere Stillsetzung des Kraftfahrzeugs 8 ohne Personengefährdung zu erreichen, sendet das Sicherheits-Steuergerät 20 den Deaktivierungsbefehl bei Vorliegen des Stillsetzungsbefehls nur bei der Erfüllung folgender zwei Bedingungen an das Funktionssteuergerät 14: Zum einen müssen das Kraftfahrzeug 8 oder der Motor stehen, zum anderen muß ein Ausgangssignal zumindest eines Erfassungsmittels 11, 12, 13 darauf hindeuten, daß sich das Kraftfahrzeug im abgestellten und unbenutzten Zustand befindet. Bei der hierfür vorgesehenen Geschwindigkeitserfassung 10 kann es sich um Raddrehzahlsensor oder einen Tachometer handeln, dessen Ausgangssignal proportional zur Fahrgeschwindigkeit ist. Der Deaktivierungsbefehl an das Funktionssteuergerät 14 wird grundsätzlich nur gesendet, wenn die Fahrzeuggeschwindigkeit einen Wert nahe oder gleich Null annimmt. Zusätzlich kann noch die Motordrehzahl erfaßt werden, damit eine Stillsetzung nur bei stehendem Motor erfolgt.

Das Funktionssteuergerät 14 wird nur dann deaktiviert, wenn das Ausgangssignal eines Temperatursensors 11 einen bestimmten vorgebbaren Grenzwert unterschreitet. Der Temperatursensor 11 erfaßt zweckmäßigerweise solche Meßgrößen, die einen eindeutigen Schluß zulassen, ob das Kraftfahrzeug 8 gerade in Betrieb ist oder längere Zeit außer Betrieb ist. Als Indikatoren dienen beispielsweise Motortemperatur, Öltemperatur oder Kühlwassertemperatur. Das Ausgangssignal des zumeist ohnehin vorhandenen Temperatursensors 11 wertet das Sicherheits-Steuergerät 20 zur Aussendung des Deaktivierungsbefehls aus. Dabei können in dem Sicherheits-Steuergerät 20 entsprechende Temperaturgrenzwerte hinterlegt sein, die so gewählt sind, daß bei dessen Unterschreitung mit größter Wahrscheinlichkeit von einem abgestellten Kraftfahrzeug 8 ausgegangen werden kann.

Als zusätzliches Erfassungsmittel zur Erkennung des abgestellten und unbenutzten Zustand des Kraftfahrzeugs 8 ist eine Innenraumüberwachung 12 vorgesehen. Diese hinlänglich bekannten Systeme basieren beispielsweise auf Ultraschallbasis und stellen fest, ob sich noch eine Person in dem Kraftfahrzeug 8 aufhält. Auch kapazitive oder elektrische Sitzbelegungserkennungen 15 können vorgesehen werden. Der Deaktivierungsbefehl an das Funktionssteuergerät 14 wird nur gegeben, wenn das Ausgangssignal der Innenraumüberwachung 12 darauf schließen läßt, daß sich niemand im Kraftfahrzeug 8 aufhält. Um unnötigen Energieverbrauch zu vermeiden, wird die Innenraumüberwachung 12 nur dann aktiviert, wenn dem Sicherheits-steuergerät 20 ein Stillegungsbefehl vorliegt.

Als weiteres alternatives oder zusätzliches Erfassungsmittel ist eine Bedienelementerfassung 13 vorgesehen. Diese überwacht Ausgangssignale von Bedienelementen, die für den ordnungsgemäßen Betrieb des Kraftfahrzeugs 8 zwingend erforderlich sind. Hierfür eignet sich beispielsweise die Erfassung des Zustands des Gaspedals, der Bremse, des Gangwahlhebels oder ähnliches. Befindet sich eines der so überwachten Bedienelemente in einem für das abgestellte Kraftfahrzeug 8 charakteristischen Zustand, wird ein Timer gestartet. Sofern dieser Timer eine vorgebbare Zeitdauer überschreitet, innerhalb derer keine Betätigung des Bedienelements erkannt wurde, kann auf ein abgestelltes Kraftfahrzeug 8 geschlossen werden. Das Sicherheits-Steuergerät 20 überwacht diesen Timer und sendet einen Deaktivierungsbefehl bei Vorliegen eines Stillsetzungsbefehls bei stehendem Fahrzeug und bei Überschreiten des vorgebbaren Timergrenzwertes an das Funktionssteuergerät 14.

Für die Deaktivierung einer betriebsnotwendigen Fahrzeugkomponente könnte auch das Zündungssignal herangezogen werden. So erfolgt eine Stillsetzung des Kraftfahrzeugs 8 nur im Zustand "Zündung aus", wenn andere Indikatoren anzeigen, daß das Fahrzeug abgestellt und nicht nur der Motor/die Zündung kurzfristig abgeschaltet wurden.

Bei einer geeigneten Auswahl der vorgestellten Erfassungsmittel 11, 12, 13 könnte auf eine Auswertung der Bedingung "Kraftfahrzeug 8 steht" über die Geschwindigkeitserfassung 10 verzichtet werden. Lediglich ein Ausgangssignal eines Erfassungsmittels 11, 12,13 wird für die Deaktivierung ausgewertet. Eine Deaktivierung kann auch dann erfolgen, wenn mehrere Ausgangssignale vorliegen, die auf ein abgestelltes Kraftfahrzeug 8 hindeuten.

Das Sicherheits-Steuergerät 20 kann den Deaktivierungsbefehl auch mehrfach senden, was die Störsicherheit des Systems verbessert. Besonders vorteilhaft ist, wenn das Sicherheits-Steuergerät 20 auch den Deaktivierungsbefehl mit einem durch besondere Maßnahmen ausösbaren, stark geschützten Freischaltbefehl widerrufen kann.

Eine weitere Verbesserung liegt dann vor, wenn Sicherheits-Steuergerät 20 und Funktionssteuergerät 14 sich bei jedem Einschalten der Zündung gegenseitig mit einem bei ihrer ersten Inbetriebnahme (=Bandende) angelernten Geräte-Ident-Code identifizieren, wodurch ein Austauschen eines deaktivierten Funktionssteuergerätes 14 sinnlos wird.

Insbesondere bei per Funk ausgelöster Stillegung ist es vorteilhaft, wenn die Stillegung nicht durch ein empfangenes Stillsetzungssignal, sondern durch längeres Ausbleiben eines per Funk übertragenen Freigabesignals ausgelöst wird. In diesem Fall wird das Stillegen des Fahrzeugs nicht durch vorsätzliches Zerstören der Empfangsantenne o. ä. verhindert. Das Sicherheits-Steuergerät 20 kontrolliert dann das ordnungsgemäße Empfangen des Freigabe-Funksignals.

## Patentansprüche

1. Vorrichtung zum Stillegen eines unrechtmäßig benutzten Kraftfahrzeugs, mit einer betriebsnotwendigen Fahrzeugkomponente (14), die von einem Sicherheits-Steuergerät (20) deaktiviert wird, wenn eine Deaktivierungsbedingung erfüllt ist, mit einer Geschwindigkeitserfassung (10), deren Ausgangssignal dem Sicherheits-Steuergerät (20) zugeführt ist, wobei eine Deaktivierung der betriebsnotwendigen Fahrzeugkomponente (14) in Abhängigkeit von dem Ausgangssignal der Geschwindigkeitserfassung (10) erfolgt und Erfassungsmittel (11, 12, 13, 15) zumindest einer weiteren für den abgestellten und unbenutzten Zustand des Kraftfahrzeugs (8) charakteristischen Größe vorgesehen sind zur Deaktivierung der betriebsnotwendigen Fahrzeugkomponente (14) in Abhängigkeit von der erfaßten Größe, **dadurch gekennzeichnet, dass** als Erfassungsmittel ein Temperatursensor (11) vorgesehen ist.

2. Vorrichtung nach Anspruch 1 **dadurch gekennzeichnet, daß** der Temperatursensor (11) die Temperatur des Kühlwassers und/oder der Öltemperatur erfaßt.

3. Vorrichtung nach einem der vorhergehenden Ansprüche, **dadurch gekennzeichnet, daß** als Erfassungsmittel eine Innenraumüberwachung (12) vorgesehen ist.

4. Vorrichtung nach einem der vorhergehenden Ansprüche, **dadurch gekennzeichnet, daß** als Erfassungsmittel eine Bedienelementerfassung (13) vorgesehen ist.

5. Vorrichtung nach einem der vorhergehenden Ansprüche, **dadurch gekennzeichnet, daß** eine Zeiterfassung vorgesehen ist, die eine Zeitspanne ab erstmaliger Betätigung eines Bedienelements ermittelt.

6. Vorrichtung nach einem der vorhergehenden Ansprüche, **dadurch gekennzeichnet, daß** als Erfassungsmittel eine Sitzbelegungserkennung vorgesehen ist.

7. Vorrichtung nach einem der vorhergehenden Ansprüche, **dadurch gekennzeichnet, daß** das sicherheits-steuergerät (20) Bestandteil des Funktionssteuergerätes (14) ist.

8. Vorrichtung nach einem der vorhergehenden Ansprüche, **dadurch gekennzeichnet, daß** die Stillsetzung nach wiederholtem und/oder längerem Ausbleiben eines Berechtigungsnachweises eingeleitet/vorbereitet wird.

9. Vorrichtung nach einem der vorhergehenden Ansprüche, **dadurch gekennzeichnet, daß** sich Sicherheits-Steuergerät (20) und Funktionssteuergerät (14) gegenseitig identifizieren beim Einschalten der Zündung und das Funktionssteuergerät (14) nur aktiviert werden kann, wenn es nicht bereits deaktiviert wurde und die Identität des Sicherheits-Steuergerätes (20) erkannt hat.

## Claims

1. Device for shutting down an unlawfully utilized motor vehicle, having an operationally necessary vehicle component (14) which is deactivated by a security controller (20) if a deactivation condition is fulfilled, having a speed-sensing means (10) whose output signal is fed to the security controller (20), the operationally necessary vehicle component (14) being deactivated as a function of the output signal of the speed-sensing means (10), and sensing means (11, 12, 13, 15) for at least one further variable which is characteristic of the deactivated and unused state of the motor vehicle (8) being provided for deactivating the operationally necessary vehicle component (14) as a function of the sensed variable, **characterized in that** a temperature sensor (11) is provided as the sensing means.

2. Device according to Claim 1, **characterized in that** the temperature sensor (11) senses the temperature of the cooling water and/or the temperature of the oil.

3. Device according to one of the preceding claims, **characterized in that** a passenger compartment monitoring means (12) is provided as the sensing means.

4. Device according to one of the preceding claims, **characterized in that** an operator control sensing means (13) is provided as sensing means.

5. Device according to one of the preceding claims, **characterized in that** a time-sensing means is provided which determines a time period starting from the first activation of an operator control.

6. Device according to one of the preceding claims, **characterized in that** a seat occupation detection means is provided as sensing means.

7. Device according to one of the preceding claims, **characterized in that** the security controller (20) is a component of the functional controller (14).

8. Device according to one of the preceding claims, **characterized in that** the deactivation is initiated/prepared after repeated and/or relatively long absence of an authorization confirmation.

9. Device according to one of the preceding claims, **characterized in that** the security controller (20) and functional controller (14) identify one another when the ignition is switched on and the functional controller (14) can be activated only if it has not already been deactivated and has detected the identity of the security controller (20).

## Revendications

1. Dispositif pour immobiliser un véhicule volé, dont un composant du véhicule (14) nécessaire à son fonctionnement est désactivé par un appareil de commande de sécurité (20) lorsqu'une condition de désactivation est remplie, et comprenant un moyen de saisie de vitesse (10) dont le signal de sortie est appliqué à l'appareil de commande de sécurité (20).
la désactivation du composant du véhicule (14) nécessaire au fonctionnement se faisant en fonction du signal de sortie du moyen de saisie de vitesse (10), et avec des moyens de saisie (11, 12, 13, 15) d'au moins une autre grandeur caractéristique de l'état arrêté ou non utilisé du véhicule (8) pour désactiver le composant du véhicule (14) nécessaire à son fonctionnement suivant la grandeur saisie,
**caractérisé en ce que**
le moyen de saisie est un capteur de température (11).

2. Dispositif selon la revendication 1,
**caractérisé en ce que**
le capteur de température (11) saisit la température de l'eau de refroidissement et/ou la température de l'huile.

3. Dispositif selon l'une quelconque des revendications précédentes,
**caractérisé en ce que**
le moyen de saisie est un moyen de surveillance de l'enceinte de l'habitacle (12).

4. Dispositif selon l'une quelconque des revendications précédentes,
**caractérisé en ce que**
le moyen de saisie est un moyen de saisie d'un élément fonctionnel (13).

5. Dispositif selon l'une quelconque des revendications précédentes,
**caractérisé en ce qu'**
il est prévu un moyen de saisie de temps qui détermine un intervalle de temps compté à partir du premier actionnement d'un élément de manoeuvre.

6. Dispositif selon l'une quelconque des revendications précédentes,
**caractérisé en ce que**
le moyen de saisie est un moyen de reconnaissance d'occupation de siège.

7. Dispositif selon l'une quelconque des revendications précédentes,
**caractérisé en ce que**
l'appareil de commande de sécurité (20) fait partie de l'appareil de commande fonctionnel (14).

8. Dispositif selon l'une quelconque des revendications précédentes,
**caractérisé en ce que**
l'immobilisation est lancée/préparée après une disparition répétée et/ou prolongée d'une preuve d'autorisation.

9. Dispositif selon l'une quelconque des revendications précédentes,
**caractérisé en ce que**
l'appareil de commande de sécurité (20) et l'appareil de commande de fonctionnement (14) s'identifient réciproquement lors du branchement de l'allumage, et
l'appareil de commande de fonctionnement (14) n'est activé que s'il n'a pas déjà été désactivé et s'il a reconnu l'identité de l'appareil de commande de sécurité (20).
